# EUROPÄISCHE PATENTANMELDUNG

(11) **EP 3 764 295 A1**
(43) Veröffentlichungstag der Anmeldung: **13.01.2021**
(21) Anmeldenummer: 19185084.1
(22) Anmeldetag: 09.07.2019
(51) Int. Cl.: G06Q 10/06

(54) **IDENTIFIZIEREN VON UNGENUTZTEN SERVERN**

(71) Anmelder: Bayer Business Services GmbH, 51061 Köln (DE)
(72) Erfinder: Die Erfindernennung liegt noch nicht vor
(74) Vertreter: BIP Patents

(57) **Zusammenfassung**

Die vorliegende Erfindung befasst sich mit dem Auffinden von ungenutzten Servern in einem Netzwerk. Gegenstände der vorliegenden Erfindung sind ein Verfahren, eine Vorrichtung und ein Computerprogrammprodukt zum Auffinden von ungenutzten Servern.

## Beschreibung

Die vorliegende Erfindung befasst sich mit dem Auffinden von ungenutzten Servern in einem Netzwerk. Gegenstände der vorliegenden Erfindung sind ein Verfahren, eine Vorrichtung und ein Computerprogrammprodukt zum Auffinden von ungenutzten Servern.

In vielen Unternehmen sind die IT-Infrastrukturen komplex und unzureichend dokumentiert. Beispielsweise werden oftmals Veränderungen nicht (ausreichend) dokumentiert und/oder Test-Server vergessen. Wenn IT-Mitarbeiter eine neue Position einnehmen, verschwindet das nicht schriftlich festgehaltene Wissen über die IT-Infrastrukturkomponenten. Die Folge ist, dass IT-Komponenten vergessen werden und ungenutzt sind. Gemäß einer Schätzung sind durchschnittlich 30% der Server in heutigen Rechenzentren ungenutzt (https://blog.anthesisgroup.com/30-of-servers-are-sitting-comatose).

Die Identifizierung und Eliminierung ungenutzter Server senken nicht nur Kosten für Energie, Wartung, Softwarelizenzen, Betriebskosten und Räumlichkeiten, sie führen auch zu einer Reduzierung von Sicherheitsrisiken und der Minderung der Ausfallwahrscheinlichkeit von Netzwerkkomponenten.

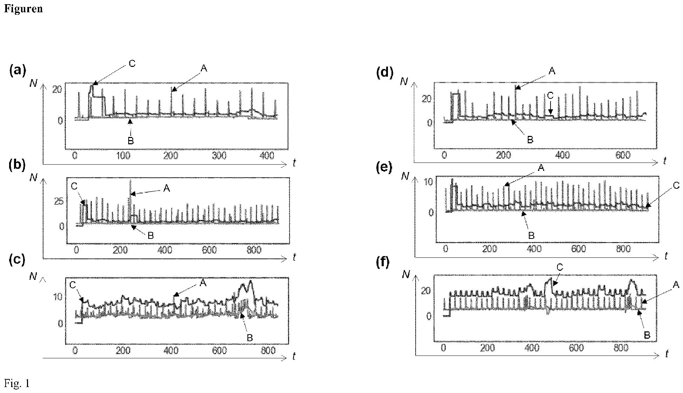

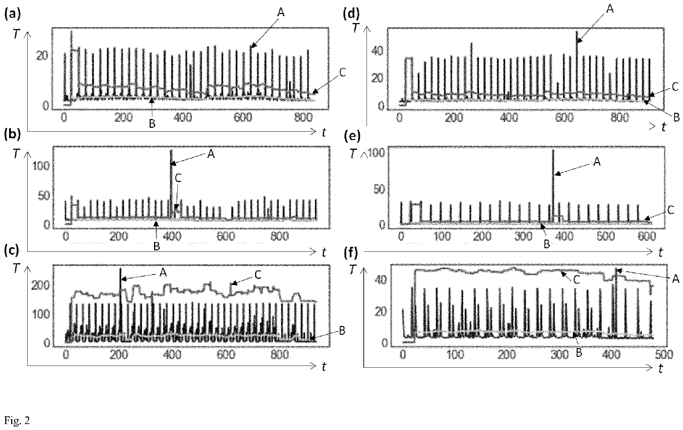

Um ungenutzte Server zu identifizieren, reicht es nicht aus, die CPU-Nutzung (CPU: *Central Processing Unit*) oder den Netzwerkverkehr von Servern zu überwachen. Dies konnte durch eigene Untersuchungen in einem internen Netzwerk bestätigt werden (siehe Figuren 1 und 2 sowie die dazugehörigen Beschreibung weiter unten). Dies liegt u.a. daran, dass es kein intuitives Kriterium gibt, ungenutzte von genutzten Servern zu unterscheiden, denn auf allen Servern laufen üblicherweise Standardprozesse wie z.B. Patching und Virenscanning, die CPU-Last und Netzwerkverkehr erzeugen. Auch haben vergessene Server oftmals noch Applikationen installiert, die automatische Prozesse starten und damit für CPU-Last, Netzwerk- und Storage-Verkehr sorgen. Tatsächlich können CPU-Netzwerk- und Storage-Profile für genutzte und ungenutzte Server verblüffend ähnlich aussehen.

N. Joukov und V. Shorokhov schlagen in ihrer Veröffentlichung mit dem Titel "*Hunt for Unused Servers*" eine Methode zur Identifizierung nicht verwendeter IT-Ressourcen basierend auf topologischen Abhängigkeiten der IT-Komponenten und der Weitergabe von Nutzungsinformationen entlang eines Abhängigkeitsgrafen vor (https://www.usenix.org/system/files/conference/cooldc16/cooldc16-paper-joukov.pdf).

Die vorgeschlagene Methode ist jedoch aufwändig, da die Gesamtheit miteinander verknüpfter Server betrachtet wird und für jeden Server entsprechende Nutzungsinformationen gesammelt werden müssen, wie im Folgenden verdeutlicht wird. Die in der genannten Publikation vorgeschlagene Topologie-Analyse beruht auf der Auswertung von Netzwerk-Kommunikation. D.h. ausgehend von Front-End-Servern wird exploriert, welche Server von diesen in Folge angesprochen werden. Diese Nutzungsdaten können für Intranet-Applikationen oftmals nicht über Hardware gesammelt werden, da die Server einer Intranet-Applikation meistens im gleichen logischen Netzwerk stehen und meistens nicht durch eine Firewall getrennt sind, wo man solche Daten sammeln könnte. Eine solche Analyse beruht also auf der Installation lokaler Skripte, die Netzwerkverbindungen direkt auf dem Server protokollieren. Hierzu ist es notwendig, entsprechende Skripte zu entwickeln, die den laufenden Betrieb nicht gefährden, diese auf allen Server zu verteilen, dann von allen Servern die Ergebnisse einzusammeln und die riesige Datenflut auszuwerten. Allein das Protokollieren der Netzwerkverbindungen auf einem Server kann, wie eigene Untersuchungen gezeigt haben, zu Speicher- und CPU-Problemen führen, was ein Risiko für den laufenden Applikationsbetrieb darstellt. Die Auswertung wird insbesondere dadurch erschwert, dass nicht nur eine Kommunikation zu Servern der gleichen Applikation stattfindet, sondern zu vielen anderen Infrastrukturkomponenten wie zu Authentisierungs-Servern, SIEM-Servern, Antiviren-Servern, Patching-Servern, Monitoring-Servern, Backup-Servern, Administrations-Servern, File-Servern etc.

Ausgehend vom beschriebenen Stand der Technik stellt sich die technische Aufgabe, in effizienter und effektiver Weise ungenutzte Server in einem Netzwerk zu identifizieren.

Diese Aufgabe wird durch die Gegenstände der unabhängigen Patentansprüche gelöst. Bevorzugte Ausführungsformen finden sich in den abhängigen Patentansprüchen sowie in der vorliegenden Beschreibung und in den Zeichnungen.

Ein erster Gegenstand der vorliegenden Erfindung ist ein Verfahren umfassend die Schritte:
- Erfassen von Daten zur Aktivität eines Servers,
- Eingeben der Daten in ein Vorhersagemodell, wobei das Vorhersagemodell auf Basis eines Trainingsdatensatzes zur Aktivität von Referenzservern trainiert worden ist, ungenutzte Referenzserver von genutzten Referenzservern zu unterscheiden,
- Empfangen eines Wahrscheinlichkeitswertes, wobei der Wahrscheinlichkeitswert eine Wahrscheinlichkeit wiedergibt, mit der es sich bei dem Server um einen ungenutzten Server handelt
- Übermitteln einer Mitteilung an einen Nutzer, wobei die Mitteilung eine Information darüber umfasst, dass es sich bei dem Server um einen ungenutzten Server oder um einen genutzten Server handelt.

Ein weiterer Gegenstand der vorliegenden Erfindung ist eine Vorrichtung umfassend:
- eine Eingabeeinheit,
- eine Steuer- und Recheneinheit und
- eine Ausgabeeinheit,
wobei die Steuer- und Recheneinheit konfiguriert ist, die Eingabeeinheit zu veranlassen, Daten zur Aktivität eines Servers zu empfangen,
wobei die Steuer- und Recheneinheit konfiguriert ist, auf Basis der Daten zur Aktivität des Servers einen Wahrscheinlichkeitswert zu berechnen, wobei der Wahrscheinlichkeitswert eine Wahrscheinlichkeit repräsentiert, dass es sich bei dem Server um einen ungenutzten Server handelt, wobei die Berechnung des Wahrscheinlichkeitswerts mit einem Vorhersagemodell erfolgt, wobei das Vorhersagemodell auf Basis eines Trainingsdatensatzes zur Aktivität von Referenzservern trainiert worden ist, ungenutzte Referenzserver von genutzten Referenzservern zu unterscheiden,
wobei die Steuer- und Recheneinheit konfiguriert ist, die Ausgabeeinheit zu veranlassen, den Wahrscheinlichkeitswert und/oder eine vom Wahrscheinlichkeitswert abgeleitete Information gegenüber einem Nutzer auszugeben.

Ein weiterer Gegenstand der vorliegenden Erfindung ist ein Computerprogrammprodukt umfassend ein Computerprogramm, das in einen Arbeitsspeicher eines Computers geladen werden kann und dort den Computer dazu veranlasst, folgende Schritte ausführen:
- Empfangen von Daten zur Aktivität eines Servers,
- Zuführen der Daten einem Vorhersagemodell, wobei das Vorhersagemodell auf Basis eines Trainingsdatensatzes zur Aktivität von Referenzservern trainiert worden ist, ungenutzte Referenzserver von genutzten Referenzservern zu unterscheiden,
- Berechnen eines Wahrscheinlichkeitswertes mit Hilfe des Vorhersagemodells, wobei der Wahrscheinlichkeitswert eine Wahrscheinlichkeit wiedergibt, mit der es sich bei dem Server um einen ungenutzten Server handelt,
- Ausgeben des Wahrscheinlichkeitswertes und/oder einer vom Wahrscheinlichkeitswert abgeleiteten Information gegenüber einem Nutzer.

Die Erfindung wird nachstehend näher erläutert, ohne zwischen den Erfindungsgegenständen (Verfahren, Vorrichtung, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, Computerprogrammprodukt) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Mit Hilfe der vorliegenden Erfindung kann für einen Server anhand von Aktivitätsdaten schnell, einfach und mit einer geringen Fehlerrate ermittelt werden, ob es sich bei dem Server um einen genutzten oder um einen ungenutzten Server handelt.

Ein "Server" ist ein Computer, der Computerfunktionalitäten wie Dienstprogramme, Daten oder andere Ressourcen bereitstellt, damit andere Computer oder Programme ("Clients") über ein Netzwerk darauf zugreifen können.

Ein "Computer" ist eine Vorrichtung zur elektronischen Datenverarbeitung, die mittels programmierbarer Rechenvorschriften Daten verarbeitet. Das heute allgemein angewandte Prinzip, das auch als Von-Neumann-Architektur bezeichnet wird, definiert für einen Computer fünf Hauptkomponenten: das Rechenwerk (im Wesentlichen die arithmetisch-logische Einheit (ALU)), das Steuerwerk, die Buseinheit, das Speicherwerk sowie die Eingabe-/Ausgabewerk(e). In den heutigen Computern sind die ALU und die Steuereinheit meistens zu einem Baustein verschmolzen, der so genannten CPU (Central Processing Unit, zentraler Prozessor).

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computer von heute werden häufig in Desktop-PCs, Portable PCs, Laptops, Notebooks, Netbooks und Tablet-PCs und so genannte Handhelds (z.B. Smartphone) unterteilt; alle diese Geräte können zur Ausführung der Erfindung genutzt werden.

Die Eingaben in den Computer erfolgen über Eingabemittel wie beispielsweise eine Tastatur, eine Maus, ein Mikrofon und/oder dergleichen. Ausgaben erfolgen üblicherweise über einen Bildschirm (Monitor), auf einem Drucker, über Lautsprecher und/oder durch Speicherung auf einem Datenspeicher.

Bei dem Server, für den ermittelt werden soll, ob er genutzt oder ungenutzt ist, kann es sich auch um einen "virtuellen Server" handeln, d.h. eine virtuelle Maschine, die als Server genutzt wird. Als "virtuelle Maschine" wird in der Informatik die softwaretechnische Kapselung eines Computersystems innerhalb eines lauffähigen Computersystems bezeichnet. Die virtuelle Maschine bildet die Rechnerarchitektur eines real in Hardware existierenden oder eines hypothetischen Computers nach.

"Aktivitätsdaten" (= Daten zur Aktivität eines Servers) sind Daten, die eine Aktivität eines Servers anzeigen und/oder mit dem Maß der Aktivität korrelieren. Ein Server ist beispielsweise dann aktiv, wenn Daten in den Server eingehen und/oder aus dem Server ausgehen und/oder Berechnungen durch einen oder mehrere Prozessoren des Servers durchgeführt werden.

Beispiele für Aktivitätsdaten sind Prozessorauslastung, Zahl der zu einem Zeitpunkt durchgeführten Prozesse, verfügbarer Arbeitsspeicher, Netzwerkaktivität, CPU-Temperatur, Kühlleistung, Stromverbrauch u.a.

Die Prozessorauslastung (auch CPU-Last oder CPU-Auslastung) wird für Multitasking-Systeme ermittelt. Sie beschreibt, welchen Anteil seiner Arbeitszeit einer oder mehrere der Hauptprozessoren eines Computers tatsächlich produktive Aufgaben bearbeitet und wird üblicherweise prozentual angegeben.

Die Netzwerkaktivität kann beispielsweise als Menge der Daten pro Zeiteinheit, die auf dem Server eingehen und/oder vom Server ausgehen, angegeben werden.

Vorzugsweise werden eine oder mehrere der folgenden Aktivitätsdaten erfasst: CPU-Nutzung (z.B. Anzahl der genutzten Prozessorkerne (Cores)), ausgehender Netzwerkverkehr (z.B. gemessen in kbps), eingehender Netzwerkverkehr (z.B. gemessen in kbps), Eingabe/Ausgabe-Vorgänge für Datenspeicher (*storage demand*, z.B. gemessen in kbps), Arbeitsspeicherauslastung (RAM-Auslastung, z.B. gemessen in Bytes).

Die Aktivitätsdaten können mit gängigen Softwareprogrammen erfasst werden (z.B. CPU-ID oder HWMonitor Pro der Fa. CPUID (https://www.cpuid.com/) oder vCenter Operations Manager der Fa. VMware, Inc. (https://www.vmware.com/de/products/vcenter-server.html)).

Die Aktivitätsdaten werden vorzugsweise über einen Beobachtungszeitraum erfasst. Der Beobachtungszeitraum kann beispielsweise eine Stunde oder mehrere Stunden betragen. Vorzugsweise beträgt der Beobachtungszeitraum mindestens einen Tag, vorzugsweise mindestens 5 Tage bis 10 Tage.

Die Aktivitätsdaten können innerhalb des Beobachtungszeitraums regelmäßig und/oder unregelmäßig erfasst werden. Vorzugsweise werden sie regelmäßig erfasst, vorzugsweise periodisch (z.B. alle 1 bis 15 Minuten oder einmal in der Stunde oder dergleichen).

Die Aktivitätsdaten können als Zeitreihe in das Vorhersagemodell zur Identifizierung ungenutzter Server eingespeist werden. Aus den Zeitreihen können aber auch mittels statistischer oder anderer mathematischer Methoden Werte abgeleitet werden, die dann als Aktivitätsdaten in das Vorhersagemodell eingespeist werden. Beispiele für solche Werte sind: das arithmetische Mittel über einen Beobachtungszeitraum, die Varianz, die Standardabweichung, das Maximum, das Minimum, der Median, die Summe, der längste Zeitraum mit Werten oberhalb des Mittelwerts, die Anzahl der Werte oberhalb/unterhalb des Mittelwertes, Fourierkoeffizienten, Entropie, erstes Auftreten des Maximums, Quantil-Werte, Schiefe (*skewness*), die Anzahl der Peaks, Anzahl der Werte über einem Vielfachen der Standardabweichung, robuster z-Score, Autokorrelation, linearer Trend, u.a.

Üblicherweise wird auf Basis der Aktivitätsdaten für einen Server ein Merkmalsvektor erzeugt. Generell gilt, dass ein Merkmalsvektor (engl.: *feature vector*) die (vorzugsweise numerisch) parametrisierbaren Eigenschaften (Merkmale) eines Objekts in vektorieller Weise zusammenfasst. Verschiedene, für das Objekt charakteristische Merkmale bilden die verschiedenen Dimensionen dieses Vektors. Die Gesamtheit der möglichen Merkmalsvektoren nennt man den Merkmalsraum. Merkmalsvektoren erleichtern beispielsweise eine automatische Klassifikation, da sie die zu klassifizierenden Eigenschaften stark reduzieren. Das *Objekt* ist im vorliegenden Fall der Server, für den ermittelt werden soll, ob er genutzt oder ungenutzt ist. Jedem Objekt wird ein Merkmalsvektor zugeordnet, der dem Vorhersagemodell zugeführt wird.

Das Vorhersagemodell ist vorzugsweise ein Modell, das mit Hilfe von maschinellem Lernen trainiert worden ist, anhand von Aktivitätsdaten genutzte und ungenutzte Server voneinander zu unterscheiden. Vorzugsweise wurde das Vorhersagemodell durch überwachtes Lernen trainiert. Hierbei werden üblicherweise ein Trainings- und ein Validierungsdatensatz von Referenzservern verwendet, um ein statistisches Modell zu erzeugen und zu validieren. Von den Referenzservern ist jeweils bekannt, ob sie genutzt oder ungenutzt sind. Für die Referenzserver liegen Referenzaktivitätsdaten vor. Anhand eines Teils der Referenzaktivitätsdaten (Trainingsdatensatz) lernt das Modell, welche Merkmale der Referenzaktivitätsdaten charakteristisch für genutzte und welche Merkmale der Referenzaktivitätsdaten charakteristisch für ungenutzte Server sind. Mit dem übrigen Teil der Referenzaktivitätsdaten (Validierungsdatensatz) kann überprüft werden, wie gut die Vorhersagen des Vorhersagemodells sind, d.h. mit welchen Fehlerraten für die Referenzserver des Validierungsdatensatzes auf Basis der Referenzaktivitätsdaten eine Vorhersage getroffen wird, ob es sich um einen genutzten oder um einen ungenutzten Server handelt.

Das Vorhersagemodell kann beispielsweise ein Klassifikationsmodell sein. Ein solches Klassifikationsmodell ordnet einen Server anhand von Aktivitätsdaten einer von mindestens zwei Klassen zu. Eine erste Klasse umfasst ungenutzte Server; eine zweite Klasse umfasst genutzte Server.

Es ist denkbar, dass mehr als zwei Klassen vorhanden sind. Denkbar sind beispielsweise drei Klassen: eine erste Klasse, die Server umfasst, bei denen die Wahrscheinlichkeit sehr groß ist (z.B. größer als 90%), dass sie ungenutzt sind, eine zweite Klasse, die Server umfasst, bei denen die Wahrscheinlichkeit sehr gering ist (z.B. kleiner als 10%), dass sie ungenutzt sind, und eine dritte Klasse, die Server umfasst umfasst, die weder der ersten noch der zweiten Klasse zuordenbar sind. Für die Server der dritten Klasse herrscht somit eine gewisse Unsicherheit, ob es sich um genutzte oder ungenutzte Server handelt. Sinnvolle Wahrscheinlichkeiten lassen sich aus dem Lernprozess, mit dem das jeweilige Klassifikationsmodell erstellt worden ist, ermitteln.

Bei dem Vorhersagemodell kann es sich auch um ein Regressionsmodell handeln. Das Regressionsmodell kann beispielsweise für einen Server anhand der Aktivitätsdaten die Wahrscheinlichkeit berechnen, dass der Server ungenutzt ist und/oder genutzt ist.

Das Vorhersagemodell (z.B. ein Klassifikationsmodell oder ein Regressionsmodell) wird vorzugsweise auf Basis eines selbstlernenden Algorithmus erstellt. Besonders bevorzugt wird das Vorhersagemodell mittels überwachten Lernens erstellt.

Für die Erstellung von Klassifikationsmodellen gibt es eine Vielzahl an Methoden, wie beispielsweise Random Forest oder Gradient Boosting. Für die Erstellung eines Regressionsmodells gibt es ebenfalls eine Vielzahl an Methoden, wie beispielsweise die logistische Regression. Diese und weitere Verfahren zur Klassifikation und Regression sind vielfältig im Stand der Technik beschrieben (siehe z.B. Norman Matloff: Statistical Regression and Classification - From Linear Models to Machine Learning, Texts in Statistical Science, CRC Press 2017, ISBN 978-1-4987-1091-6; Pratap Dangeti, Statistics for Machine Learning, Packt Publishing 2017, ISBN 978-1-78829-575-8).

Denkbar ist auch die Verwendung eines künstlichen neuronalen Netzes, das mittels eines Trainingsdatensatzes zum Beispiel über ein Backpropagations-Verfahren trainiert worden, ungenutzte von genutzten Servern zu unterscheiden. Details zur Erzeugung eines künstlichen neuronalen Netzes können der umfangreichen Fachliteratur entnommen werden (siehe z.B. François Chollet: Deep Learning mit Python und Keras, mitp Verlags GmbH & Co. KG, 2018, ISBN 978-1617294433).

Das Ergebnis der Modellerstellung ist ein Vorhersagemodell (z.B. ein Klassifikationsmodell oder ein Regressionsmodell), das auch auf "unbekannte" Server anwendbar ist. Dabei ist ein "unbekannter" Server ein Server, für den nicht bekannt ist, ob es sich um einen genutzten oder ungenutzten Sever handelt. Die Aktivitätsdaten eines "unbekannten" Servers werden in das Vorhersagemodell eingespeist und das Vorhersagemodell berechnet einen Wahrscheinlichkeitswert. Der Wahrscheinlichkeitswert repräsentiert eine Wahrscheinlichkeit, mit der es sich beim dem Server um einen ungenutzten Server handelt. Der Wahrscheinlichkeitswert richtet sich üblicherweise nach dem verwendeten Modell. Bei Verwendung eines Klassifikationsmodells kann der Wahrscheinlichkeitswert (Ergebniswert) beispielsweise die Klasse angeben, der der Server zugordnet worden ist. Bei Verwendung eines Regressionsmodells kann der Wahrscheinlichkeitswert beispielsweise die Wahrscheinlichkeit angeben, dass es sich bei dem Sever um einen ungenutzten Server handelt. Der Wahrscheinlichkeitswert wird als Ergebnis vom Vorhersagemodell ausgegeben und kann gegenüber einem Nutzer ausgegeben und/oder gespeichert werden. Anhand des Wahrscheinlichkeitswerts kann der Nutzer erkennen, ob es sich bei dem "unbekannten" Server (eher) um einen genutzten oder (eher) um einen ungenutzten Server handelt. Denkbar ist auch, dass nicht der Wahrscheinlichkeitswert selbst gegenüber dem Nutzer ausgegeben wird sondern eine vom Wahrscheinlichkeitswert abgeleitete Information. Denkbar ist zum Beispiel, dass der Wahrscheinlichkeitswert die Wahrscheinlichkeit angibt, dass es sich bei dem "unbekannten" Server um einen ungenutzten Server handelt; liegt die Wahrscheinlichkeitswert oberhalb eines definierten Schwellwertes, kann gegenüber dem Nutzer beispielsweise eine Information ausgegeben werden, die der Nutzer dahingehend interpretiert, dass es sich um einen ungenutzten Server handelt. Liegt die Wahrscheinlichkeitswert unterhalb eines definierten Schwellenwertes, kann gegenüber dem Nutzer beispielsweise eine Information ausgegeben werden, die der Nutzer dahingehend interpretiert, dass es sich um einen genutzten Server handelt. Die Information kann ein Wort, ein Satz, eine Grafik, ein Tabelleneintrag und/oder dergleichen sein.

Mit Hilfe der vorliegenden Erfindung können ungenutzte von genutzten Servern unterschieden werden. Ein in der Fachwelt synonym zum Begriff "ungenutzter Server" (engl. *unused server*) verwendeter Begriff ist der Begriff "komatöser Server" (engl. *comatose server*). Dabei kann der Nutzer der vorliegenden Erfindung in einem gewissen Ausmaß im Rahmen der Erzeugung des Vorhersagemodells selbst festlegen, was unter einem ungenutzten Server zu verstehen ist. Das Vorhersagemodell wird mit Hilfe von Referenzservern und Referenzaktivitätsdaten trainiert. Für die Referenzserver ist bei einem überwachten Lernen bekannt, ob sie genutzt oder ungenutzt sind. Je nachdem, was der Nutzer unter einem genutzten und ungenutzten Server versteht, wird er die entsprechende Zuordnung der Referenzserver zu genutzten und ungenutzten Servern vornehmen. Diese Zuordnung wird dann von dem Vorhersagemodell gelernt und auf "unbekannte" Server angewendet. Die Zuordnung (d.h. die Definition, was ein ungenutzter Server ist) ist damit in dem Vorhersagemodell verankert.

Die nachfolgenden Definitionen für den Begriff "ungenutzt" sind damit lediglich bevorzugte Ausführungsformen der vorliegenden Erfindung. Es ist denkbar, dass ein ungenutzter Server im Sinne der vorliegenden Erfindung eine oder mehrere der nachfolgenden Definitionen erfüllt.

In einer Ausführungsform der vorliegenden Erfindung ist ein Server dann ungenutzt, wenn er über eine definierte Zeitspanne keine Aktivität leistet, die durch einen menschlichen Nutzer in der definierten Zeitspanne hervorgerufen wird und/oder einem menschlichen Nutzer in der Zeitspanne dient.

In einer Ausführungsform der vorliegenden Erfindung ist ein Server dann ungenutzt, wenn er aus dem Netzwerk entfernt werden kann, ohne dass die Entfernung einen negativen Einfluss auf einen (menschlichen) Nutzer hat.

In einer Ausführungsform der vorliegenden Erfindung ist ein Server dann ungenutzt, wenn er aus dem Netzwerk entfernt werden kann, ohne dass ein (menschlicher) Nutzer das Entfernen bemerkt.

In einer Ausführungsform der vorliegenden Erfindung ist ein Server dann ungenutzt, wenn er aus dem Netzwerk entfernt werden kann, ohne dass die von Nutzern angestoßenen Prozesse auf anderen Servern oder Clients beeinträchtigt werden.

In einer Ausführungsform der vorliegenden Erfindung ist ein Server dann ungenutzt, wenn er versehentlich installiert wurde und nicht wieder entfernt wurde.

In einer Ausführungsform der vorliegenden Erfindung ist ein Server dann ungenutzt, wenn er von zu wenigen Personen oder an zu wenigen Tagen/Zeitpunkten benutzt wird.

In einer Ausführungsform der vorliegenden Erfindung ist ein Server dann ungenutzt, wenn er zu groß skaliert wurde. Das bedeutet, dass der Server mehr CPU oder RAM zur Verfügung hat, als für ihn und seine laufenden Prozesse notwendig sind.

Die Erfindung wird nachstehend anhand eines Beispiels und anhand von Figuren näher erläutert, ohne die Erfindung auf die in dem Beispiel oder den Figuren beschriebenen/gezeigten Merkmale und Merkmalskombinationen beschränken zu wollen.

In Fig. 1 sind Daten zur CPU-Nutzung von sechs Servern ((a), (b), (c), (d), (e), (f)) während einer Beobachtungszeitspanne einander gegenüber gestellt. Die Grafen zeigen die CPU-Nutzung der Server (Ordinate: Zahl *N* der aktiven Prozessorkerne) als Funktion der Zeit *t* (Abszisse: Zeit in Stunden). Die mit dem Buchstaben A markierten Grafen zeigen die zum jeweiligen Zeitpunkt aktiven Prozessorkerne. Die mit dem Buchstaben B markierten Grafen zeigen einen Mittelwert der Zahl der aktiven Prozessorkerne über einen Zeitraum von 24 Stunden (gleitender arithmetischer Mittelwert). Die mit dem Buchstaben C markierten Grafen zeigen die 5-Sigma-Linien (=fünffache Standardabweichung) der letzten 24 Stunden. Die Grafen auf der linken Seite (Fig. 1 (a), (b), (c)) zeigen die CPU-Nutzung von genutzten Servern. Die Grafen auf der rechten Seite (Fig. 1 (d), (e), (f)) zeigen die CPU-Nutzung von ungenutzten Servern. Jedem Grafen eines genutzten Servers ist ein Graf eines ungenutzten Servers mit einem ähnlichen Verhalten gegenübergestellt ((a)→(d),) (b)→(e), (e)→(f)). Allein anhand der augenscheinlichen Betrachtung der CPU-Nutzung ist demnach keine intuitive Identifizierung ungenutzter Server möglich.

In Fig. 2 sind Daten zum Netzwerkverkehr von sechs Servern ((a), (b), (c), (d), (e), (f)) während einer Beobachtungszeitspanne einander gegenüber gestellt. Die Grafen zeigen Raten der auf dem jeweilgen Server eingehenden Daten (Ordinate: Datenrate *T*) als Funktion der Zeit *t* (Abszisse: Zeit in Stunden). Die mit dem Buchstaben A markierten Grafen zeigen die Datenraten zum jeweiligen Zeitpunkt. Die mit dem Buchstaben B markierten Grafen zeigen einen Mittelwert der Datenraten über einen Zeitraum von 24 Stunden (arithmetischer Mittelwert). Die mit dem Buchstaben C markierten Grafen zeigen die 5-Sigma-Linien (=fünffache Standardabweichung) der letzten 24 Stunden. Die Grafen auf der linken Seite (Fig. 1 (a), (b), (c)) zeigen die Datenraten von genutzten Servern. Die Grafen auf der rechten Seite (Fig. 1 (d), (e), (f)) zeigen die Datenraten von ungenutzten Servern. Jedem Grafen eines genutzten Servers ist ein Graf eines ungenutzten Servers mit einem ähnlichen Verhalten gegenübergestellt ((a)→(d),) (b)→(e), (e)→(f)). Allein anhand der augenscheinlichen Betrachtung der Datenraten ist demnach keine intuitive Identifizierung ungenutzter Server möglich.

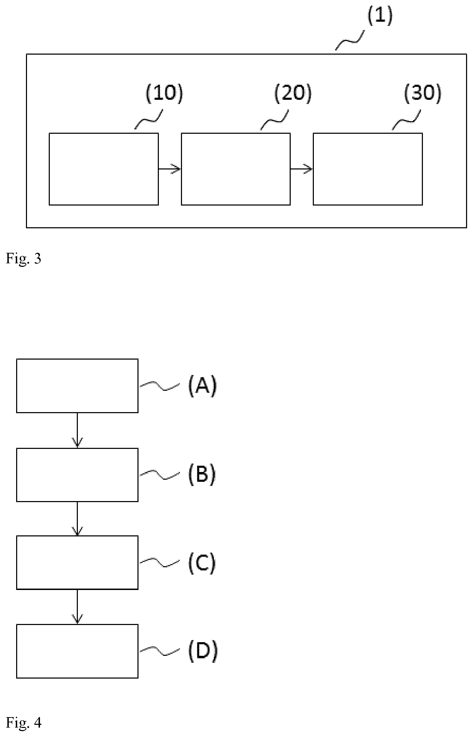

Fig. 3 zeigt schematisch eine Ausführungsform einer erfindungsgemäßen Vorrichtung. Die Vorrichtung (1) umfasst eine Eingabeeinheit (10), eine Steuer- und Recheneinheit (20) und eine Ausgabeeinheit (30). Die Eingabeeinheit (10) nimmt Aktivitätsdaten von Servern entgegen und leitet diese an die Steuer- und Recheneinheit (20) weiter (dargestellt durch den Pfeil zwischen der Eingabeeinheit und der Steuer- und Recheneinheit). Die Steuer- und Recheneinheit (20) umfasst ein Vorhersagemodell (in Fig. 3 nicht explizit dargestellt). Das Vorhersagemodell ist trainiert, ungenutzte Server von genutzten Servern anhand von Aktivitätsdaten zu unterscheiden. Die Steuer- und Recheneinheit (20) führt die Aktivitätsdaten dem Vorhersagemodell zu. Das Vorhersagemodell berechnet anhand der Aktivitätsdaten einen Wahrscheinlichkeitswert. Der Wahrscheinlichkeitswert repräsentiert eine Wahrscheinlichkeit, mit der es sich beim dem Server um einen ungenutzten Server handelt. Die Steuer- und Recheneinheit (20) übermittelt den Wahrscheinlichkeitswert und/oder eine von dem Wahrscheinlichkeitswert abgeleitete Information an die Ausgabeeinheit (30) (dargestellt durch den Pfeil zwischen der Steuer- und Recheneinheit und der Ausgabeeinheit). Die Ausgabeeinheit (30) kann den Wahrscheinlichkeitswert und/oder die abgeleitete Information gegenüber einem Nutzer anzeigen. Bei der Vorrichtung (1) kann es sich beispielsweise über einen Computer handeln. Denkbar ist auch die Verwendung von mehreren Computern, die über ein Netzwerk miteinander verknüpft sind.

Fig. 4 zeigt schematisch in Form eines Ablaufdiagramms eine Ausführungsform des erfindungsgemäßen Verfahrens.

Das Verfahren umfasst die Schritte:
(A) Erfassen von Daten zur Aktivität eines Servers,
(B) Eingeben der Daten in ein Vorhersagemodell, wobei das Vorhersagemodell auf Basis eines Trainingsdatensatzes zur Aktivität von Referenzservern trainiert worden ist, ungenutzte Referenzserver von genutzten Referenzservern zu unterscheiden,
(C) Empfangen eines Wahrscheinlichkeitswertes, wobei der Wahrscheinlichkeitswert eine Wahrscheinlichkeit wiedergibt, mit der es sich beim dem Server um einen ungenutzten Server handelt
(D) Übermitteln einer Mitteilung an einen Nutzer, wobei die Mitteilung eine Information darüber umfasst, dass es sich bei dem Server um einen ungenutzten Server oder um einen genutzten Server handelt.

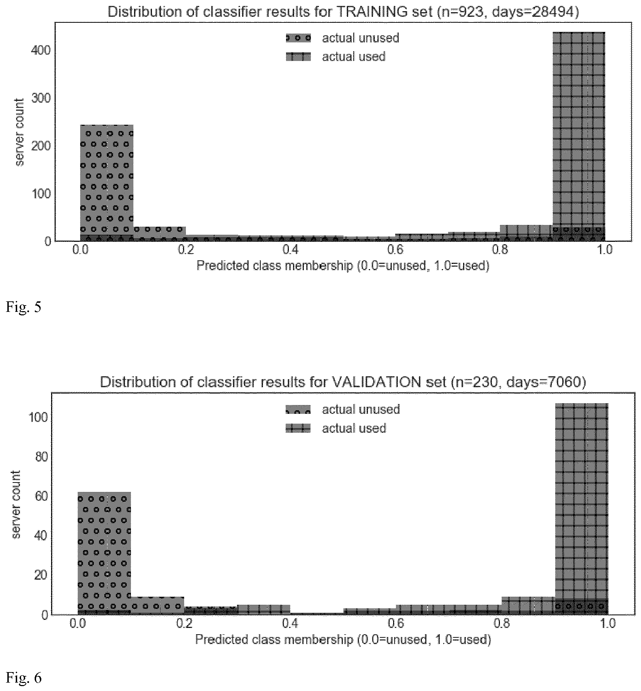

Figuren 5 und 6 zeigen die Ergebnisse der Erzeugung und Validierung eines Vorhersagemodells mit Hilfe von 1153 Referenzservern eines internen Netzwerks. Für die einzelnen Referenzserver ist bekannt, ob sie genutzt (*actual used*) oder ungenutzt (*actual unused*) sind. Auf Basis der Aktivitätsdaten von 923 Servern wurde ein Vorhersagemodell trainiert (Trainingsdatensatz). Es wurden die Prozessorauslastung (in Prozent), die auf den jeweiligen Server eingehenden Daten (in Kilobit pro Sekunde), die vom jeweiligen Server ausgehenden Daten (in Kilobit pro Sekunde) und Eingabe/Ausgabe-Vorgänge für Datenspeicher (*storage demand*, in Kilobit pro Sekunde) über einen Beobachtungszeitraum von mindestens zwei Wochen betrachtet.

Mit Hilfe der Zeitreihendaten wurde ein künstliches neuronale Netz des Typs LSTM (Long Short-Term Memory) trainiert und validiert. Dabei wurde das Modell trainiert, für ungenutzte Referenzserver einen Wert zwischen 0 und 1 auszugeben, der als Regressionswert angenähert wird. Dabei bedeutet ein Wert nahe 0, dass der Server, der mit den Eingabedaten assoziiert ist, eher unbenutzt ist. Umgekehrt bedeutet ein Regressionswert nahe 1, dass der assozierte Server eher in Benutzung ist. Anschließend wurde das trainierte Vorhersagemodell (LSTM-Netzwerk) mit einem Validierungsdatensatz validiert.

Fig. 5 zeigt das Ergebnis des Trainings in Form eines Balkendiagramms. Die Abszisse (x-Achse) ist in zehn Abschnitte unterteilt: 0.0 ≤ x < 0.1, 0.1 ≤ x < 0.2, 0.2 ≤ x < 0.3, 0.3 ≤ x < 0.4, 0.4 ≤ x < 0.5, 0.5 ≤ x < 0.6, 0.6 ≤ x < 0.7, 0.7 ≤ x < 0.8, 0.8 ≤ x < 0.9, 0.9 ≤ x ≤ 1.0. Der Wert x gibt denjenigen Wert wieder, den das neuronale Netz als Ausgabe ausgibt, wenn ein Merkmalsvektor (Aktivitätsdaten) für einen Server eingespeist wird. Dabei bedeutet x=0.0, dass es sich mit Sicherheit um einen ungenutzten Server handeln und x=1.0, dass es sich mit Sicherheit um einen genutzten Server handelt. Auf der Ordinate ist die jeweilige Zahl der Referenzserver aufgetragen, für den das Vorhersagemodell einen x-Wert innerhalb eines der zehn Abschnitte als Aufgabewert ausgibt. Der Großteil der ungenutzten Server ist dem Abschnitt 0.0 ≤ x < 0.1 zugeordnet; der Großteil der genutzten Server der Klasse dem Abschnitt 0.9 ≤ x ≤ 1.0.

Fig. 6 zeigt das Ergebnis der Validierung in Form eines Balkendiagramms. Die Abszisse (x-Achse) ist wie in Fig. 5 in zehn Abschnitte unterteilt: 0.0 ≤ x < 0.1, 0.1 ≤ x < 0.2, 0.2 ≤ x < 0.3, 0.3 ≤ x < 0.4, 0.4 ≤ x < 0.5, 0.5 ≤ x < 0.6, 0.6 ≤ x < 0.7, 0.7 ≤ x < 0.8, 0.8 ≤ x < 0.9, 0.9 ≤ x ≤ 1.0 Der Wert x gibt denjenigen Wert wieder, den das neuronale Netz als Ausgabe ausgibt, wenn ein Merkmalsvektor (Aktivitätsdaten) für einen Server eingespeist wird. Dabei bedeutet x=0.0, dass es sich mit Sicherheit um einen ungenutzten Server handeln und x=1.0, dass es sich mit Sicherheit um einen genutzten Server handelt. Auf der Ordinate ist die jeweilige Zahl der Referenzserver aufgetragen, für den das Vorhersagemodell einen x-Wert innerhalb eines der zehn Abschnitte als Aufgabewert ausgibt. Der Großteil der ungenutzten Server ist dem Abschnitt 0.0 ≤ x < 0.1 zugeordnet; der Großteil der genutzten Server der Klasse dem Abschnitt 0.9 ≤ x ≤ 1.0.

Wird ein Schwellenwert von 0.3 eingefügt und werden alle Server, für die der Wert x kleiner als 0.3 ist als "eher ungenutzt" klassifiziert und alle Server für die der Wert x größer oder gleich 0.3 ist als "eher genutzt" klassifiziert (binäre Klassifizierung), kann folgende Konfusionsmatrix gewonnen werden:

| | vorhergesagt: "eher genutzt" | vorhergesagt: "eher ungenutzt" |
|---|---|---|
| tatsächlich genutzt | 133 | 8 |
| tatsächlich ungenutzt | 21 | 68 |

68 der 89 tatsächlich ungenutzten Referenzserver werden als "eher ungenutzt" und 21 der 89 tatsächlich ungenutzten Referenzserver als "eher genutzt" eingeordnet. 133 der 141 tatsächlich genutzten Server werden als "eher genutzt" und 8 der 141 tatsächlich genutzten Server werden als "eher ungenutzt" eingeordnet. Es ergibt sich damit eine Genauigkeit (*accuracy*) von 87,4 %.

Dieselben Daten (Testdatensatz und Validierungsdatensatz) wurden zum Trainieren und Validieren eines Klassifikationsmodells auf Basis von XGBoost verwendet. Für jeden der genannten Werte als Funktion der Zeit wurden folgende Parameter abgeleitet: das globale Maximum, der arithmetische Mittelwert, der längste Zeitraum mit Werten oberhalb des Mittelwerts (*longest strike above mean*), die Varianz, die Standardabweichung und Fourierkoeffizienten. Daraus ergaben sich für jeden Referenzserver 24 Werte, aus denen für jeden Referenzserver ein Merkmalsvektor erzeugt wurde. Diese Merkmale dienten als Eingabe für das Verfahren XGBoost. Hierbei lag die Genauigkeit (*accuracy*) bei 92,5%.

Durch eine Kombination des LSTM Netzwerks und des XGBoost Classifiers konnte eine Genauigkeit von 95,8% erreicht werden. Dafür wurden die Ausgabewerte der beiden Verfahren (die Klassenzuordnung des XGBoost in "unbenutzt" gleichzusetzen mit 0 und "benutzt" gleichzusetzen mit 1; und der Regressionswert des LSTM) in einen Merkmalsvektor kombiniert und gemeinsam mit den Referenzwerten der zu klassifizierenden Server in einen weiteren Algorithmus als Eingabewerte gegeben. Für diesen Algorithmus sind mehrere Modelle, wie ein neuronales Netz u.a. denkbar. In diesem speziellen Fall wurde erneut ein XGBoost Classifier berechnet. Wie das Ergerbnis von 95,8% Genauigkeit (*accuracy*) zeigt, konnten die Stärken des LSTM-Netzwerks und XGBoost erfolgreich in dem resultierenden Ensemble kombiniert werden.

## Patentansprüche

1. Verfahren umfassend die Schritte:
- Erfassen von Daten zur Aktivität eines Servers,
- Eingeben der Daten in ein Vorhersagemodell, wobei das Vorhersagemodell auf Basis eines Trainingsdatensatzes zur Aktivität von Referenzservern trainiert worden ist, ungenutzte Referenzserver von genutzten Referenzservern zu unterscheiden,
- Empfangen eines Wahrscheinlichkeitswertes, wobei der Wahrscheinlichkeitswert eine Wahrscheinlichkeit wiedergibt, mit der es sich bei dem Server um einen ungenutzten Server handelt
- Übermitteln einer Mitteilung an einen Nutzer, wobei die Mitteilung eine Information darüber umfasst, dass es sich bei dem Server um einen ungenutzten Server oder um einen genutzten Server handelt.

2. Verfahren gemäß Anspruch 1, wobei die Daten zur Aktivität des Servers ausgewählt sind aus der Reihe: Anzahl der genutzten Prozessorkerne, ausgehender Netzwerkverkehr, eingehender Netzwerkverkehr, Eingabe/Ausgabe-Vorgänge für Datenspeicher und/oder Arbeitsspeicherauslastung.

3. Verfahren gemäß einem der Ansprüche 1 oder 2, wobei die Daten zur Aktivität eines Servers über einen Beobachtungszeitraum von mindestens einem Tag, vorzugsweise von mindestens 5 Tagen erfasst werden, und als Zeitreihe in das Vorhersagemodell eingespeist werden.

4. Verfahren gemäß einem der Ansprüche 1 oder 2, wobei die Daten zur Aktivität eines Servers über einen Beobachtungszeitraum von mindestens einem Tag, vorzugsweise von mindestens 5 Tagen erfasst werden, und aus den Zeitreihen mittels statistischer oder anderer mathematischer Methoden Werte abgeleitet werden, die dann als Aktivitätsdaten in das Vorhersagemodell eingespeist werden.

5. Verfahren gemäß Anspruch 4, wobei die Aktivitätsdaten ausgewählt sind aus der Reihe: globales Maximum, arithmetischer Mittelwert, längster Zeitraum mit Werten oberhalb des Mittelwerts, Varianz, Standardabweichung und/oder Fourierkoeffizienten.

6. Verfahren gemäß einem der Ansprüche 3 bis 6, wobei die Daten zur Aktivität des Servers über den Beobachtungszeitraum periodisch erfasst werden.

7. Verfahren gemäß einem der Ansprüche 1 bis 6, wobei das Vorhersagemodell ein Klassifikationsmodell ist oder ein Klassifikationsmodell umfasst, das den Server einer von mindestens zwei Klassen zuordnet.

8. Verfahren gemäß einem der Ansprüche 1 bis 6, wobei das Vorhersagemodell ein Regressionsmodell ist oder ein Regressionsmodell umfasst, das für den Server eine Wahrscheinlichkeit berechnet, dass der Server genutzt und/oder ungenutzt ist.

9. Verfahren gemäß einem der Ansprüche 1 bis 8, wobei das Vorhersagemodell mittels eines Verfahrens zum überwachten Lernen trainiert worden ist, genutzte von ungenutzten Servern zu unterscheiden.

10. Verfahren gemäß einem der Ansprüche 1 bis 9, wobei ein ungenutzer Server ein Server ist, der aus dem Netzwerk entfernt werden kann, ohne dass die von Nutzern angestoßenen Prozesse auf anderen Servern oder Clients beeinträchtigt werden.

11. Vorrichtung umfassend:
- eine Eingabeeinheit,
- eine Steuer- und Recheneinheit und
- eine Ausgabeeinheit,
wobei die Steuer- und Recheneinheit konfiguriert ist, die Eingabeeinheit zu veranlassen, Daten zur Aktivität eines Servers zu empfangen,
wobei die Steuer- und Recheneinheit konfiguriert ist, auf Basis der Daten zur Aktivität des Servers einen Wahrscheinlichkeitswert zu berechnen, wobei der Wahrscheinlichkeitswert eine Wahrscheinlichkeit repräsentiert, dass es sich bei dem Server um einen ungenutzten Server handelt, wobei die Berechnung des Wahrscheinlichkeitswerts mit einem Vorhersagemodell erfolgt, wobei das Vorhersagemodell auf Basis eines Trainingsdatensatzes zur Aktivität von Referenzservern trainiert worden ist, ungenutzte Referenzserver von genutzten Referenzservern zu unterscheiden,
wobei die Steuer- und Recheneinheit konfiguriert ist, die Ausgabeeinheit zu veranlassen, den Wahrscheinlichkeitswert und/oder eine vom Wahrscheinlichkeitswert abgeleitete Information gegenüber einem Nutzer auszugeben.

12. Computerprogrammprodukt umfassend ein Computerprogramm, das in einen Arbeitsspeicher eines Computers geladen werden kann und dort den Computer dazu veranlasst, folgende Schritte ausführen:
- Empfangen von Daten zur Aktivität eines Servers,
- Zuführen der Daten einem Vorhersagemodell, wobei das Vorhersagemodell auf Basis eines Trainingsdatensatzes zur Aktivität von Referenzservern trainiert worden ist, ungenutzte Referenzserver von genutzten Referenzservern zu unterscheiden,
- Berechnen eines Wahrscheinlichkeitswertes mit Hilfe des Vorhersagemodells, wobei der Wahrscheinlichkeitswert eine Wahrscheinlichkeit wiedergibt, mit der es sich bei dem Server um einen ungenutzten Server handelt,
- Ausgeben des Wahrscheinlichkeitswertes und/oder einer vom Wahrscheinlichkeitswert abgeleiteten Information gegenüber einem Nutzer.

13. Computerprogrammprodukt gemäß Anspruch 12, das in einen Arbeitsspeicher eines Computers geladen werden kann und dort den Computer dazu veranlasst, einen oder mehrere Schritte eines Verfahrens gemäß einem der Ansprüche 1 bis 10 auszuführen.
